# EUROPEAN PATENT SPECIFICATION

(11) **EP 1 873 214 B1**
(45) Date of publication and mention of the grant of the patent: **18.05.2011**
(21) Application number: 06732032.5
(22) Date of filing: 18.04.2006
(51) Int. Cl.: C08L 101/00, C08K 13/04, C09B 67/02, C09B 67/20, D06P 5/00

(54) **COLORANT COMPOSITION AND METHOD OF COLORING**
FARBMITTELZUSAMMENSETZUNG UND FÄRBEVERFAHREN
COMPOSITION DE COLORANT ET MÉTHODE DE COLORATION

(30) Priority: 18.04.2005 JP 2005120196
(43) Date of publication of application: 02.01.2008
(73) Proprietor: MITSUBISHI PENCIL Co., Ltd., Tokyo 140-8537 (JP)
(72) Inventor: MIYAMOTO, Masaru Mitsubishi Pencil Co., Ltd., Yokohama-shi, Kanagawa, 2218550 (JP); KAMAGATA, Tadashi Mitsubishi Pencil Co., Ltd., Yokohama-shi, Kanagawa, 2218550 (JP)
(74) Representative: Hubert, Philippe
(86) International application number: PCT/JP2006/308103
(87) International publication number: WO 2006/112452

(56) References cited:
- EP-A1- 0 835 890
- EP-A2- 1 371 697
- JP-A- 09 316 353
- JP-A- 2001 146 558
- JP-A- 2003 261 790
- JP-A- 2003 313 454
- JP-A- 2004 026 930
- JP-A- 2004 195 697
- JP-A- 2005 139 340
- US-A- 4 185 962

## Description

### Technical Field

The present invention relates to a coloring composition, and a coloring method and more particularly to a coloring composition which permits a clear and uniform coloration of a substance to be colored such as a fibrous structure, and a method for coloring such substance.

### Background Art

As techniques for coloring articles (a substance to be colored), for instance, fibrous structures such as yarns or threads, cloths, woven goods, knitted goods, and nonwoven fabrics, there have conventionally been tried a variety of coloring methods such as the dip dyeing technique in which a fibrous structure is dipped in a coloring composition, and the printing technique in which a fibrous structure is colored using a transfer-controlling plate such as a silk screen printing plate, a stencil printing plate, a relief printing plate, an intaglio printing plate, and a lithographic printing plate.

In the dip dyeing technique, a dye is used as a coloring dye, a fibrous structure is dipped in such a dye composition under heating and pressurizing conditions to thus make the dye penetrate into the fibrous structure, or such a fibrous structure is stirred and kneaded in the dye composition to uniformly adhere the dye to the structure and to thus prevent the formation of any color spot and/or the occurrence of any insufficient coloration. After the completion of the coloring step, the colored fibrous structure is washed with water or an aqueous solvent to remove any excess coloring component and to thus give a colored fibrous structure having good fastness of color without impairing the aesthetic property of the structure.

There have been proposed various kinds of coloring dye compositions suitably used for coloring naturally occurring fibrous materials such as those obtained from cotton, hemp, silk, and wool fibers as well as synthetic fibrous materials such as those made of polyester, acrylic, rayon and nylon fibers, while appropriately selecting the kinds of dyes used as dyestuffs for coloration and they have widely been used for the coloration of a variety of fibrous materials such as those listed above. However, this technique suffers from a drawback that a specific dye should be properly selected depending on each particular fibrous material for the coloration since the technique makes use of a dye as a dyestuff for coloration. In particular, when coloring a mixed fibrous material comprising at least two different fibrous materials, this technique should use a plurality of coloring compositions or a plurality of coloring steps.

Moreover, the technique requires, in the coloring and/or washing processes, the use of a large quantity of energy and a large amount of industrial water for the heating, pressurizing, stirring and washing steps. This in turn leads to the discharge of a large amount of waste water and therefore, there has been desired for the development of a novel coloring method and a novel coloring composition in the light of, for instance, the achievement of a high energy efficiency, the effective use of water resources and the prevention of any environmental pollution.

In the printing (or dye transfer) technique, the transfer-controlling plate can be used for controlling the amount of the dye to be adhered and the area to which the dye is adhered when adhering a coloring composition to a fibrous structure and accordingly, this technique is an excellent coloring method which permits a high quality and highly precise coloration of, for instance, fine designs and patterns, pictorial symbols, dabbed patterns and/or gradated patterns. The coloring composition used in the dye transfer technique must be prepared to have a viscosity that the transfer-controlling plate can normally show its function and in case of, for instance, a silk screen printing plate, the viscosity of the composition should be controlled to such a level that the composition does not cause any leakage through the mesh of the screen. The coloring agent used in this technique may be either dye or pigment.

When using a dye, the colored fibrous structure is washed with water or an aqueous solvent, after the coloring step, to remove any excess coloring component and to thus give a colored fibrous structure having good fastness of color without impairing the aesthetic property of the structure, like the dip dyeing technique. There have been proposed various kinds of coloring dye compositions suitably used for coloring naturally occurring fibrous materials such as those obtained from cotton, hemp, silk, and wool fibers as well as synthetic fibrous materials such as those made of polyester, acrylic, rayon and nylon fibers, while appropriately selecting the kinds of dyes to be used and they have widely been used for the coloration of a variety of fibrous materials such as those listed above.

On the other hand, when using a pigment, a binder should be used for firmly adhering the pigment per se to a fibrous structure and accordingly, there has been used a coloring composition simultaneously comprising a polymer compound as a binder.

However, the dye transfer technique, which makes use of a coloring composition containing a dye, likewise suffers from a drawback that a specific dye should be properly selected depending on each particular fibrous material for the coloration since the technique makes use of a dye as a dyestuff for coloration, like the dip dyeing technique. In particular, when coloring a mixed fibrous material comprising at least two different fibrous materials, this technique should use a plurality of coloring compositions or a plurality of coloring steps.

Accordingly, this technique requires, in the coloring and/or washing processes, the use of a large quantity of energy and a large amount of industrial water for the heating, pressurizing, stirring and washing steps. This in turn leads to the discharge of a large amount of waste water. Therefore, there has likewise been desired to develop a novel coloring method and a novel coloring composition in the light of, for instance, the achievement of a high energy efficiency, the effective use of water resources and the prevention of any environmental pollution.

Moreover, the dye transfer technique, which makes use of a coloring composition containing a pigment, also suffers from drawbacks that particles of the pigment and/or the polymer compound used as a binder are adhered to the surface of a transfer-controlling plate and this in turn results in the reduction of the amount of the composition adhered to the fibrous structure and the area thereof to be colored and that the pigment and/or the polymer compound adhered to the fibrous structure may reduce the aesthetic properties and flexibility of the fibrous structure. For this reason, there has been desired to develop a novel coloring composition.

Patent Document 1 discloses a coloring agent for use in the dip dyeing technique, whose particle size is not more than 0.5 µm, a colored article obtained using the composition and a coloring method which makes use of the same. However, the coloring dyestuff used in this coloring agent is a disperse dye and accordingly, this method does not improve or eliminate the problems of the appropriate selection of the material for a fibrous structure due to the use of a dye; the requirement for the use of complicated steps; the requirement for large quantities of energy and industrial water; the delivery of a large quantity of waste water.

In addition, Patent Document 2 discloses an ink composition whose particulate materials as the components thereof have a particle size of not more than 10 µm and a screen printing method which makes use of the ink, but this technique has not yet satisfactorily solved the problems concerning the impairment of the aesthetic properties and the flexibility of the fibrous structure to be treated.
Patent Document 1: Japanese Un-Examined Patent Publication 2003-313454;
Patent Document 2: Japanese Un-Examined Patent Publication 2004-195697.

JP 2003 313454 A teaches a disperse dye of which 90 mass-% or more of primary particles have a particle diameter of 0.3 µm or smaller. EP 835 890 A1 shows an aqueous ink comprising a dispersive dye having average particle size in a range from 80 nm to 250 nm and water and a water-soluble urethane polymer addition polymer produced from a carboxylated diol and a polyisocyanate.

US 4 185 962 shows dyeing or printing for hydrophobic synthetic or semi-synthetic, high molecular organic substances with an organic dyestuff with 0.01 to 10 µm particles dispersed in a liquid organic compound containing a dissolved alkyd resin.

JP 2001 146558 A shows a pigment aqueous dispersion obtained by dispersing a pigment having a specific surface area of 80 m2/g-120 m2/g into an aqueous medium in the presence of dispersing agents.

According to JP 9 316353 A an amino resin, a polyester or polyurethane resin having amino groups, with an amount of the amino groups of 20 to 350 mmol per 100g of the solid resin and a pigment form a hydrous cake to which an acidic compound is then added to neutralize part or the whole of the amino groups in the resin and then water followed by stirring to obtain an aqueous dispersion of the pigment of 10 to 500nm in volume-average particle size.

JP 2003 261790 A shows an ink jet ink prepared from a colored resin emulsion, which is prepared by dispersing colored resin fine particles comprising a vinylic resin containing an organic pigment in an aqueous medium.

EP 1 371 697 A2 shows an inkjet ink composition comprising a liquid medium, a colorant and an inkjet ink binder including polymeric nanoparticles with a mean diameter in the range of 1 to 50 nanometers.

JP 2004 195697 A teaches screen printing an ink with a viscosity of 5,000 to 100,000 CPS containing particles with a diameter of 10 µm or less on a base material using a screen of gauze having a weave aperture of 280 to 400 mesh and a rubber squeegee with a Shore hardness of 40 to 85°.

### Disclosure of the invention

### Problems that the invention is to solve

Accordingly, it is an object of the present invention to provide a coloring composition which can eliminate the drawbacks associated with the foregoing conventional techniques and a coloring method which makes use of the composition.

It is another object of the present invention to provide a coloring composition which has a good color-developing ability and excellent fastness of color and which would permit the formation of a thin and uniform colored and coated layer on the surface of a fibrous structure without impairing the aesthetic properties of the fibrous structure.

It is still another object of the present invention to provide a coloring composition which has a high color-developing ability, is not accompanied by the formation of any color spot and which permits the coloration of any fibrous structure irrespective of the kinds of their materials, without causing the reduction of the aesthetic properties and flexibility of the fibrous structure.

It is a further object of the present invention to provide a method for coloring even a mixed material using a single coloring composition and at a single step.

It is a still further object of the present invention to provide a method for coloring a fibrous structural material, which is quite simple, can ensure a high working efficiency, a high energy efficiency and quite effective use of water resources and which is free of any environmental pollution.

It is a still further object of the present invention to provide a coloring method which does not require the use of any washing step, requires the use of a reduced quantity of energy, produces only a small amount of waste water, ensures effective use of water resources and is free of any environmental pollution.

Means for the solution of the problems

The invention is defined in the claims.

### Effects of the invention

The coloring composition and coloring method of the present invention make use of pigment particles, as a dyestuff for coloration, whose average particle size is not more than 100 nm and polymer particles, as a binder, preferably having an average particle size of not more than 100 nm and therefore, they can form a thin and uniform colored and coated layer on the surface of a fibrous structure without impairing the aesthetic properties of the fibrous structure; they can ensure a good color-developing ability and excellent fastness of color; they permit the coloration of even a mixed material using a single coloring composition and by a single coloring step; they can further ensure a high working efficiency, a high energy efficiency and quite effective use of water resources and they are substantially free of any environmental pollution.

It is considered that the following are the reasons why the coloring composition and coloring method of the present invention are excellent as compared with the conventional ones:

The conventional fiber-coloring composition which makes use of a pigment undergoes adhesion to the fibrous structure, forms a thick color-developing coated layer since the particles of the pigment and a binder polymer used therein have a large particle size. Accordingly, it has not provided any clear color-development and, in turn, any colored fibrous structure having good aesthetic properties.

On the other hand, the coloring composition and coloring method of the present invention make use of a pigment and a polymer binder, which have been finely pulverized to a specific particle size. Accordingly, they can form a thinner colored, coated layer, while the aesthetic properties of the resulting colored fibrous structure can be maintained or even improved, the generation of voids in the coated layer can be limited to the lowest possible level, the resulting article has an improved fastness of color and they also ensure a clear color development.

### Best mode for carrying out the invention

Various modes for carrying out the present invention will hereunder be described in more detail.

In the present invention, the term "fibrous structure" means yarns or threads, cloths, woven goods, knitted goods, nonwoven fabrics, paper, plates, leather and other sheet-like products, as well as articles prepared from these products, which are made of natural fibers, synthetic fibers, semi-synthetic fibers or mixture thereof.

The coloring composition of the present invention is defined in claims 1 and 2.

As the dyestuff component for coloration used in the coloring composition of the present invention, usable herein include all of the inorganic and organic pigments which can be dispersed in water and an aqueous solvent and have chromatic colors. Moreover, it is also possible to use pseudo-pigments obtained by pigmenting resin emulsions with dyes.

Such inorganic pigments may be, for instance, metal powder and powdery metal-containing compounds, while such organic pigments may be, for instance, azo lake pigments, insoluble azo pigments, chelate azo pigments, phthalocyanine pigments, perylene and perinone pigments, anthraquinone pigments, quinacridone pigments, dye lake pigments, nitro pigments, and nitroso pigments.

More specifically, examples of pigments usable herein include inorganic pigments, for instance, carbon black such as channel black, furnace black and thermal black, titanium black, iron black, lead black, copper-chromium black, cobalt black, red iron oxide, chromium oxide, cobalt blue, yellow iron oxide, viridian, cadmium yellow, vermilion, cadmium red, lead yellow, molybdate orange, zinc chromate, strontium chromate, ultramarine blue, barite powder, iron blue, manganese violet, aluminum powder, and brass powder; and organic pigments such as aniline black, perylene black, cyanine black, pseudo-pigments obtained by pigmenting resin emulsions with black dyes, C.I. Pigment Blue 1, C.I. Pigment Blue 15, C.I. Pigment Blue 17, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 4, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 83, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7. In the present invention, the foregoing pigments may be used alone or in any combination of at least two of them.

The average particle size of the pigment particles present in the coloring composition of the present invention is not more than 100nm. This is because if the coloring composition contains pigment particles whose average particle size exceeds 200nm, the surface roughness of the resulting colored fibrous structure increases and this accordingly leads to the increase of the frictional resistance and the corresponding reduction of the fastness to rubbing. On the other hand, if the coloring composition contains pigment particles whose average particle size is less than 10nm, the resulting coloring composition is liable to cause the reduction of, for instance, the color density developed and the weatherability. Therefore, the average particle size of the pigment particles used in the present invention ranges from 10 to 100nm.

As the means for controlling the average particle size of the pigment particles, usable herein includes, for instance, a method comprising the steps of adding, to the foregoing pigment, water and an aqueous solvent and optionally a wetting agent, a moisturizing agent, a dispersion stabilizer and then blending them using a shear force-applying type dispersion device currently used in this field. For instance, the foregoing mixture is processed using, for instance, a stirring type dissolver, a homomixer, a Henschel mixer, a medium-type ball mill, a sand mill, an attritor, a paint-shaker, a medium-less type three-roll or five-roll mill, a jet mill, a water-jet mill or an ultrasonic dispersion device for a predetermined period of time to thus give pigment particles having an intended average particle size.

In addition, desired pigment particles having a predetermined average particle size can more certainly be prepared when by pulverizing and dispersing the pigment in a dispersion device and then optionally removing coarse particles and extremely fine particles present in the resulting pigment particles. The pigment particles other than those having a desired particle size may be removed by, for instance, the static settling technique, the centrifugal sedimentation technique, or filtration.

The pigment particles used in the present invention are quite fine and accordingly, they may again undergo agglomeration due to any external factor or upon the coloring process to thus impair the desired quality of the coloring composition. To prevent such re-agglomeration of the pigment particles, it is preferred to subject the surface of the pigment particles to a hydrophilization treatment

comprising the step of imparting, to the surface of pigment particles hydroxyl, carboxyl, and/or amino groups through the treatment of the pigment particles with a dispersing agent containing a surfactant and/or a water-soluble polymer to thus improve the stability of the particles. Examples of surfactants usable herein are anionic ones such as alkyl carboxylic acid esters, alkyl-sulfuric acid esters and alkyl-phosphoric acid esters; cationic ones such as aliphatic ammonium salts; and nonionic ones such as alkyl ethers, fatty acid ester ethers and sorbitan fatty acid esters. In addition, examples of the foregoing water-soluble polymers usable herein include polymeric dispersing agents such as polyvinyl pyrrolidone, polyvinyl alcohols, acrylics (such as low molecular weight polyacrylic acids and poly(methacrylic acids)), poly(maleic acids), copolymers of styrene with acrylic acid, methacrylic acid, polyamides and rosin-modified maleic acids.

Furthermore, it is also possible to hydrophilize the surface of pigment particles using a treatment with an alkali such as sodium hydroxide, a treatment with an oxidizing agent such as chromic acid, or a topochemical treatment such as the low temperature plasma treatment.

Among the hydrophilic groups which can be imparted to the surface of the pigment particles, hydroxyl and carboxyl groups are particularly preferred since they may cause a cross-linking reaction with binder polymer molecules and a crosslinking agent during the coloration of a fibrous structure and this may in turn result in the effect of improving the fastness of the color.

The content of the pigment particles in the coloring composition of the present invention preferably ranges from 0.1 to 15% by mass and more preferably 0.5 to 10% by mass based on the total mass of the coloring composition. This is because if the content thereof is less than 0.1% by mass, there is observed a tendency that the resulting composition does not show any satisfactory color development, while if it exceeds 15% by mass, the resulting coloring composition has a tendency that the fastness thereof to rubbing is reduced.

The binder polymer used in the present invention should be one capable of being dispersed in water and an aqueous solvent in the form of fine particles preferably having an average particle size of not more than 100nm. On the other hand, if the coloring composition contains a binder polymer whose average particle size exceeds 200nm, there may be observed the following tendency: the thickness of the coated layer formed by the binder polymer increases and this in turn leads to the deterioration of the aesthetic properties of the fibrous structure colored by the composition and the ability of the binder polymer to bind the pigment particles is reduced and this accordingly results in the reduction of the fastness thereof to rubbing. On the other hand, if binder polymer particles having an average particle size of less than 10nm are present in the coloring composition, there may be a tendency that the liquid coloring composition becomes unstable due to the agglomeration of such fine particles. For this reason, the average particle size of the binder particles used in the present invention ranges from 10 to 100nm to use the binder polymer particles, whose average particle size is controlled in such a manner that it falls within the range of from 10 to 100nm, since the use thereof permits the formation of a micro-coat as a coated layer formed from the binder polymer, while maintaining the aesthetic properties of the fibrous structure and the use likewise permits the improvement of the ability of the binder polymer to bind the pigment particles.

The binder polymer used in the present invention desirably has a glass transition temperature of not higher than 10°C and more preferably not higher than 5°C. If the glass transition temperature of the binder polymer exceeds 10°C, the binder polymer insufficiently forms a coated film when the coloring method of the present invention is applied to a fibrous structure in a working environment maintained at room temperature (20°C ± 10°C) and a large number of voids are formed in the resulting film. There is observed a tendency that these voids remain in the film even after the heat-treatment thereof and this accordingly reduces the strength of the coated layer made of the binder polymer. On the other hand, if the glass transition temperature of the binder polymer is less than 10°C, the binder polymer can form a uniform film even at room temperature to thus prevent any reduction of the strength of the resulting film. The binder polymer used in the present invention is not restricted to any specific one inasmuch as it may satisfy the foregoing requirements and examples thereof include easily available and commonly used ones such as acrylic polymers, acrylic monomer-styrene copolymer, acrylic monomer-urethane copolymers, acrylic monomer-maleic acid copolymers, acrylic monomer-butadiene copolymers, acrylic monomer-vinyl acetate copolymers, ethylene-vinyl acetate copolymers, polyurethanes and polyolefins.

The binder polymer used in the present invention may be in the form of, for instance, an emulsion or a dispersion.

The content of the binder polymer particles in the coloring composition of the present invention preferably ranges from 0.5 to 20% by mass and more preferably 1 to 10% by mass based on the total mass of the coloring composition. This is because if the content thereof is less than 0.5% by mass, there is observed a tendency that the binder polymer does not show its ability as a binder and the resulting composition shows a reduced fastness to rubbing, while if it exceeds 20% by mass, the resulting coloring composition has a tendency that the aesthetic properties of the fibrous structure processed with the composition are impaired.

The coloring composition of the present invention can be used for the coloration of a variety of articles. Examples of such articles are fibrous structures such as yarns or threads, cloths, woven goods, knitted goods, nonwoven fabrics, paper, plates, and leather. The coloring methods particularly preferably used for coloring fibrous structures include, for instance, the dye transfer technique and the dip dyeing technique.

When coloring a fibrous structure according to the dye transfer technique, the coloring composition used in the technique should have a viscosity that the transfer-controlling plate can normally show its function. For instance, in case where a silk screen printing plate is used, the viscosity of the composition should be controlled to such a level that the composition does not cause any leakage through the mesh of the screen used.

For instance, when using a silk screen printing plate having a large pore size on the order of 60 mesh, filaments each having a diameter of 83 µm are usually used, the screen has a rate of opening of 65% and a pore size of 340 µm and accordingly, the composition should have a viscosity at which the coloring agent does not permeate into the screen even at a penetration volume of 55 cm³/m².

The coloring composition of the present invention comprises pigment particles and binder polymer particles, having a quite small particle size and therefore, the viscosity thereof should be controlled to a level of not less than 5,000mPa·s and preferably not less than 20,000mPa·s. However, if the viscosity thereof is too high on the order of higher than 200,000mPa·s, the meshes of the screen printing plate are plugged with the coloring composition and accordingly, the coloration of a fibrous structure is liable to be insufficient. For this reason, when using a silk screen printing plate having a large pore size on the order of 60 mesh, the coloring composition used should have a viscosity preferably ranging from 5,000 to 200,000mPa·s and more preferably 20,000 to 100,000mPa·s.

On the other hand, when using a silk screen printing plate having a small pore size on the order of 120 mesh, filaments having a diameter ranging from 48 to 83 µ m are usually used, the screen has a rate of opening of 49% and a pore size of 152 µm and accordingly, the composition used should have a viscosity at which the coloring composition does not permeate into the screen even at a penetration volume of 39 cm³/m² and which also permits the appropriate passage of the composition through the screen mesh when applying a pressure with a squeegee. To prevent the permeation of any coloring composition through the screen, the viscosity of the composition is desirably controlled to a level of not less than 3,000mPa·s and preferably not less than 15,000mPa·s. However, if the viscosity thereof exceeds 150,000mPa·s, when pressurizing the screen with a squeegee, the meshes of the screen printing plate are plugged with the coloring composition and accordingly, the coloration of a fibrous structure is liable to be insufficient, because of the extremely high viscosity of the composition. Accordingly, when using a silk screen printing plate having a small pore size on the order of 120 mesh, the coloring composition used should have a viscosity preferably ranging from 3,000 to 150,000mPa·s and more preferably 15,000 to 80,000mPa·s.

When using a silk screen printing plate having a pore size of 230 mesh for the purpose of accomplishing the high quality and high precision dye transfer coloration, filaments having a diameter ranging from 48 to 67 µm are usually used, the screen has a rate of opening of 28% and a pore size of 65 µm and accordingly, the coloring composition used should have a viscosity at which the composition does not permeate into the screen even at a penetration volume of 22 cm³/m² and which also permits the appropriate passage of the composition through the screen mesh when applying a pressure with a squeegee. To prevent the permeation of any coloring composition through the screen, the viscosity of the composition is desirably controlled to a level of not less than 1,000mPa·s s and preferably not less than 2,000mPa·s. However, if the viscosity thereof exceeds 120,000mPa·s, when pressurizing the screen with a squeegee, the meshes of the screen printing plate are plugged with the coloring composition and accordingly, the coloration of a fibrous structure is liable to be insufficient, because of the extremely high viscosity of the composition. Accordingly, when using a silk screen printing plate having a finer pore size on the order of 230 mesh, the coloring composition used should have a viscosity preferably ranging from 1,000 to 120,000mPa·s and more preferably 2,000 to 70,000mPa·s.

When coloring, in this way, fibrous structures using the coloring composition of the present invention according to the dye transfer technique the viscosity of the coloring composition should be adjusted while taking into consideration the mesh size, pore size and penetration volume of the silk screen printing plate. Thus, high quality and high precision pictorial symbols, dabbed patterns and/or gradated patterns can be colored at high resolution.

The squeegee used in the coloring method according to the present invention should be one which can apply a desired pressure to the coloring composition present on the silk screen printing plate, can satisfactorily make the composition pass through the openings of the screen printing plate and can appropriately scratch off the unnecessary coloring composition from the silk screen and accordingly, the squeegee should have appropriate elastic characteristics. If the squeegee has a Shore hardness of not more than 35 degrees, the resulting squeegee is insufficient in its strength and it may immediately be worn out, while if the Shore hardness thereof is higher than 91 degrees, the resulting squeegee has insufficient elastic characteristics and accordingly, the squeegee does not serve to appropriately scratch off, from the silk screen, the unnecessary coloring composition. For this reason, the hardness of the squeegee used in the coloring method of the present invention more preferably ranges from 40 to 80 degrees and the squeegee would have highly satisfied physical properties and excellent durability inasmuch as the hardness thereof falls within the range specified above. The usual elastic molded articles and resins commercially available can be used as the material for forming such a squeegee without any restriction insofar as they satisfy the foregoing requirement for the physical properties or the Shore hardness specified above. Specific examples thereof are acrylic rubber, acrylic urethane rubber, acrylic nitrile rubber, acrylic butadiene rubber (acrylic acid or methacrylic acid-butadiene rubber), urethane rubber, butadiene rubber, butyl rubber, NBR (acrylonitrile-butadiene rubber), epoxy elastomers and fluororubber.

Various kinds of thickening agents can be used for controlling the viscosity of the coloring composition according to the present invention. Such a thickening agent may be, for instance, at least one member selected from the group consisting of synthetic polymers, cellulose materials and polysaccharides and terpene emulsions, which may be used alone or in any combination of at least two of them.

Specific examples of the foregoing synthetic polymers are polyacrylic acids, polyvinyl alcohol, polyethylene oxide, polyvinyl pyrrolidone, polyvinyl methyl ether, and polyacrylamide. Specific examples of cellulose materials are ethyl cellulose, methyl cellulose, hydroxymethyl cellulose, and carboxymethyl cellulose. Specific examples of the foregoing polysaccharides are xanthane gum, guar gum, casein, gum arabic, gelatin, carrageenan, alginic acid, tragacanth gum, locust bean gum, and pectin. Specific examples of the foregoing terpene emulsions include mousse-like emulsions obtained by emulsifying a mixture of mineral terpene and water with a nonionic surfactant.

In case where a fibrous structure is colored using the coloring composition of the present invention according to the dip dyeing technique, the viscosity of the coloring composition should be controlled so that the fibrous structure is wetted with the coloring composition to thus stably adhere the pigment and the binder polymer to the fibrous structure. In particular, if the viscosity of the composition is too low and when the pigment as the dyestuff for the coloration is in the fine particulate state, the pigment adhered to the fibrous structure may migrate from the course area to the dense portion of the structure due to the capillary phenomenon thereof when drying the structure provided thereon with the coloring composition adhered thereto and this in turn leads to the formation of color spots and any uniformly colored product cannot be obtained at all. For this reason, the viscosity of the composition is preferably adjusted to a level of not less than 10mPa·s. However, when the viscosity of the coloring composition exceeds 1000mPa·s, the composition hardly penetrates into the fibrous structure. Therefore, when coloring the fibrous structure according to the dip dyeing technique, the coloring composition of the present invention preferably has a viscosity ranging from 10 to 1000mPa·s, and more preferably 20 to 500mPa·s.

The use of the coloring composition whose viscosity is adjusted to a level falling within the range specified above permits the formation of a satisfactorily colored fibrous structure according to the dip dyeing technique.

When coloring a fibrous structure with the coloring composition of the present invention according to the dip dyeing technique, the aesthetic properties and color-developing ability of the structure may variously vary depending on the amount of the coloring composition adhered thereto. Accordingly, the rate of pickup of the coloring composition (the adhered amount (by mass) of the composition (prior to drying) based on the amount (100 parts by mass) of the fibrous structure) preferably ranges from 50 to 91% and more preferably 60 to 80%. If the rate of pickup is less than 50%, the adhered amount of the composition is too low to give a colored product having a satisfactory hue corresponding to the sufficient coloration, while if it exceeds 91%, the adhered amount of the composition is too high and this accordingly leads to the formation of a colored fibrous structure provided with an extremely thick coated layer and having impaired aesthetic properties. Thus, the use of the coloring composition of the present invention whose rate of pickup is adjusted to a level specified above permits the formation of a colored fibrous structure excellent in the color-developing ability, the aesthetic properties and the fastness of color.

In the fibrous structures colored using the coloring composition of the present invention according to the dip dyeing technique and the dye transfer technique, the pigment as the coloring dyestuff is held on the surface of the fibers preferably by the action of the polymer binder and accordingly, the method of the invention does not require the use of any additional step for removing, for instance, any excess coloring agent, any sizing agent and any additive through washing with water after the coloration with the coloring composition and the subsequent drying operation. Moreover, the coloring method of the present invention using the coloring composition of the present invention does not require the selection of any appropriate dye suitably used for each particular fibrous material and the control of heating, pressurizing and stirring conditions for properly making the dye penetrate into the fibrous structure. Accordingly, the coloring method of the present invention permits the coloration of even a mixed material using a single coloring composition and a single step for coloration and accordingly, it can be said that the coloring method of the present invention is an excellent coloring method since it is excellent in the working efficiency and the energy efficiency, and it permits the effective use of the water resources and it is free of any environmental pollution.

The coloring composition of the present invention uses, as the solvent, water (for instance, tap water, distilled water, purified water, deionized water, pure water and deep sea water). In addition to water, however, it is also preferred to use an aqueous medium other than water having a polar group which makes the medium compatible with water, which can impart water retention characteristics to the resulting composition and improve the stability of the pigment and the binder polymer. Examples of such aqueous mediums are methyl alcohol, ethyl alcohol, isopropyl alcohol, ethylene glycol, diethylene glycol, triethylene glycol, polyethylene glycol, propylene glycol, ethylene glycol monomethyl ether, glycerin, and pyrrolidone. In addition to these aqueous mediums, usable herein also include, for instance, non-aqueous solvents such as liquid paraffin, mineral oils and industrial gasoline, insofar as they can be blended with water or dispersed therein through the use of, for instance, an emulsifying agent. These solvents may be used alone or in any combination.

The content of water in the coloring composition of the present invention preferably ranges from 10 to 90% by mass and more preferably 30 to 80% by mass.

When the binder polymer is used alone in the coloring composition of the present invention, the resulting film may sometimes be insufficient in the strength and fastness thereof. In this case, the fastness of the resulting film can be improved by the incorporation, into the coloring composition, of a crosslinking agent which can undergo a crosslinking reaction with, for instance, hydroxyl and/or carboxyl groups present in the pigment and the binder polymer.

In this respect, the following crosslinking reactions can be used: the dehydration condensation reaction of methylol groups with hydroxyl groups; the epoxy ring-opening polymerization reaction of glycidyl groups with hydroxyl groups; the urethane-forming reaction of isocyanate groups with hydroxyl and/or carboxyl groups; the amide ester-forming reaction of oxazoline groups with carboxyl group; the carbamoylamide-forming and isourea-forming reaction of carbodiimide groups with hydroxyl and carboxyl groups; the condensation dehydration reaction of silanol groups with hydroxyl groups; the dehydration condensation reaction of metal alkoxide groups with hydroxyl groups; the melamine-condensation reaction of polyfunctional methylol groups with hydroxyl groups; and the reduction dehydration reaction of diacetone acrylamide with hydrazide and hydroxyl groups. When incorporating these aqueous crosslinking agents into the coloring composition and then heating the resulting mixture, the hydroxyl and carboxyl groups of the pigment and/or the binder polymer undergo a crosslinking reaction with the crosslinking agents to form a three-dimensional network and as a result, the fastness of the resulting film may be substantially improved.

The content of the crosslinking agent in the coloring composition of the present invention preferably ranges from 0.1 to 5% by mass and more preferably 0.2 to 2.5% by mass.

The coloring composition of the present invention may further comprise, in addition to the foregoing components, other optional additives commonly or widely used in the coloring composition in an amount which does not adversely affect the intended effects of the present invention, for instance, an antiseptic agent, an antifungal agent, a sequestering agent, a pH-adjusting agent, a lubricant, and/or a wetting agent.

Examples of such antiseptic and antifungal agents include phenols, sodium omadine, sodium pentachlorophenol, 1,2-benzisothiazolin-3-one, 2,3,5,6-tetrachloro-4-(methyl-sulfonyl) pyridine, sodium benzoate, alkali metal salts of benzoic acid, sorbitan fatty acid and dehydro-acetic acid, and benzimidazole type compounds.

Examples of such sequestering agent are benzotriazole, dicyclohexyl ammonium nitrite, di-isopropyl ammonium nitrite, tolyl triazole, and saponins.

Examples of the foregoing pH-adjusting agent include urea, aqueous ammonia, monoethanolamine, triethanolamine, aminomethyl propanol, alkali metal salts of phosphoric acid such as sodium tripolyphosphoate and alkali metal hydroxides such as sodium hydroxide.

Examples of the foregoing lubricants and wetting agents are polyalkylene glycol derivatives such as polyoxyethylene lauryl ether, alkali metal salts of fatty acids, silicone oil emulsions, polyether-modified silicones such as polyethylene glycol adducts of dimethylene polysiloxane, poly(tetrafluoroethylene) powder, fluorochemical surfactants, fluorine-modified oils and acetylene glycol.

### Examples

Then the present invention will be described in more detail with reference to the following Pigment-Preparation Examples, Examples and Comparative Examples, but the present invention is not restricted to these specific Examples at all.

Pigment-Preparation Example 1: Pigment-Preparation Example using paint shaker (Pigment 1):

| Component | Amt. (part by mass) |
|---|---|
| Carbon black (Printex 25)(*1) | 20.0 |
| Ethylene glycol | 5.0 |
| Styrene-maleic acid resin (SMA·1000)(*2) | 10.0 |
| Acetylene glycol 104H(*3) | 0.2 |
| Water | 64.8 |

There was dispensed each of the foregoing components in the amount specified above, the components thus dispensed were stirred in a dissolver to give a uniform dispersion and then the resulting formulation was stirred in a paint shaker for 8 hours under a condition that the bead-packing rate by volume was set at 60% to thus give Pigment 1. The average particle size of pigment particles included in the resulting product of this pigment-preparation example 1 was determined using NICOMP 380ZLS (available from NOZAKI Sangyo Co., Ltd.) and 100nm polystyrene particles (3100A) and 300nm polystyrene particles (3300A), as reference materials, which were available from Duke Scientific Corporation and had been authorized by NIST (National Institute of Standards and Technology) according to the laser-diffraction technique and as a result, it was found to be 90nm.

Pigment-Preparation Example 2: Pigment-Preparation Example using paint shaker (Pigment 2):

| Component | Amt. (part by mass) |
|---|---|
| Red pigment (Naphthol Red: PigNo-PR17) (*4) | 20.0 |
| Ethylene glycol | 5.0 |
| Water-soluble polyester resin (Z-221)(*5) | 8.0 |
| Acetylene glycol 104H(*3) | 0.2 |
| Water | 66.8 |

There was dispensed each of the foregoing components in the amount specified above, the components thus dispensed were stirred in a dissolver to give a uniform dispersion and then the resulting formulation was stirred in a paint shaker for 10 hours at a bead-packing rate by volume set at 60% to thus give Pigment 2. The average particle size of pigment particles included in the resulting product of this pigment-preparation example 2 was determined according to the laser-diffraction technique and as a result, it was found to be 80nm.

### Comparative Pigment 1: Pigment 3: Ryudye-W Black RC conc (*6)

The average particle size of pigment particles included in this comparative pigment 1 was determined according to the laser-diffraction technique and as a result, it was found to be 2.2 µm.

### Comparative Pigment 2: Pigment 4: New Lacqutimine Standard Red FL3G conc (*7)

The average particle size of pigment particles included in this comparative pigment 2 was determined according to the laser-diffraction technique and as a result, it was found to be 760nm.

Stock Sizing Formulation 1: Thickening Agent 2

| Component | Amt. (part by mass) |
|---|---|
| Water | 37.0 |
| PEGASOL 3040 (*8) | 60.0 |
| Hi-ol PKC-500 (*9) | 1.0 |
| Bismol ET-55 (*10) | 2.0 |

There was dispensed each of the foregoing components in the amount specified above, the components thus dispensed were treated for the emulsification thereof using a homomixer to give a mousse-like thickening agent and the latter was used as the thickening agent for the preparation of the products of the following Examples and Comparative Examples.

### Examples 1 to 4 and Comparative Examples 1 to 3

Each coloring composition was prepared using the components listed in the following Tables 1 and 2 according to the compositions likewise specified in these Tables and then fibrous structures were colored using these coloring compositions according to the coloring methods specified below. In this connection, there were evaluated the physical properties and the working properties during the coloring operations of the coloring compositions prepared in Examples and Comparative Examples and the aesthetic properties and the fastness to rubbing of the colored fibrous structures, according to the following evaluation methods:

### (Method for Determining Average Particle Size)

Each of the coloring compositions prepared in the foregoing Examples and

Comparative Examples was diluted 100 times with deionized water and the average particle size of the pigment particles dispersed therein was determined using NICOMP 380ZLS (available from NOZAKI Sangyo Co., Ltd.) and 100nm polystyrene particles (3100A) and 300nm polystyrene particles (3300A), as reference materials, which were available from Duke Scientific Corporation and had been authorized by NIST (National Institute of Standards and Technology) according to the laser-diffraction technique.

### (Method for the Determination of Viscosity)

The viscosity of the coloring compositions prepared in the foregoing Examples and Comparative Examples was determined at 25°C and at 0.5 rpm using TV-30 type Viscometer: Cone Plate type Standard Rotor (available from TOKI Sangyo Co., Ltd.).

### (Mesh-Permeation Test 1) (Dye transfer technique/Leakage characteristics)

Each of the coloring compositions prepared in the foregoing Examples and Comparative Examples was allowed to stand, for 4 hours, on a silk screen printing plate having a fine mesh size of 120 (TG-1200 available from MURAKAMI Screen Co., Ltd.) to thus examine the leakage of the coloring composition through the screen with the naked eyes.

○: There was not observed any leakage of the coloring composition; Δ: There was not observed any leakage of the coloring composition, but the liquid moiety thereof permeated through the screen; × : There was observed the leakage of the coloring composition.

### (Mesh-Permeation Test 2) (Dye transfer technique/Uniformity of coloration)

Each of the coloring compositions prepared in the foregoing Examples and Comparative Examples was allowed to stand, for 10 minutes, on a silk screen printing plate having a fine mesh size of 120 (TG-1200 available from Screen Co., Ltd.) and then a solid pattern was printed on the whole surface of a polyester taffeta (available from IROZOME Co., Ltd.) with each composition using a squeegee made of urethane rubber having a Shore hardness of 50 degrees according to the dye transfer technique, dried at 120°C for one minute and the fibers thus colored were visually inspected for the uniformity of the coloration thereof.

○: The whole surface was uniformly colored; Δ: There was observed the presence of some small voids; ×: There was observed the presence of distinct un-colored area.

### (Color Spots Test) (Dip dyeing technique/Uniformity of coloration)

A polyester taffeta (available from IROZOME Co., Ltd.) was dipped in each of the coloring compositions prepared in the foregoing Examples and Comparative Examples for 20 seconds, then the amount of the composition adhered to the taffeta was controlled to a level corresponding to a rate of pickup of 80±2% according to the padding method, the colored taffeta was dried at 120°C for one minute and the fibers thus colored were visually inspected for the uniformity of the coloration thereof.

○: The whole surface was uniformly colored; Δ: There was observed the presence of some small color spots; × : There was observed the presence of distinct color spots.

### (Test for the Confirmation of Aesthetic Property)

Fabrics subjected to the coloring treatment in the foregoing "Mesh-Permeation Test 2" and "Color Spots Test" were inspected for the aesthetic properties which were evaluated on the basis of the difference in the feeling upon the touch with the fingers between the fabrics before (raw fabrics) and after the coloring treatment.

○: There was not observed any difference; Δ: There were observed slightly hard aesthetic properties; ×: There was observed distinct change in the aesthetic properties.

### (Test for Fastness to Rubbing)

Fabrics subjected to the coloring treatment in the foregoing "Mesh-Permeation Test 2" and "Color Spots Test" were inspected for the fastness to rubbing according to the testing method specified in JIS L 0849 and the results were judged on the basis of the evaluation standards likewise specified therein. The evaluation standards specified in JIS L 0801-9 (Determination of Fastness to dyeing) were adopted herein as the evaluation standards for the dry and wet fastness to rubbing.

The results thus obtained are summarized in the following Tables 1 (dye transfer technique) and 2 (dip dyeing technique).

**Table 1**

| Component | Ex. No. | | | |
|---|---|---|---|---|
| | 1 | 2 | 3 | 4^{x} |
| Pigment 1 (particle size: 90nm) | 5 | | | 5 |
| Pigment 2 (particle size: 80nm) | | 5 | 10 | |
| Binder 1 (particle size: 76nm) (*11) | 18 | | 12 | |
| Binder 2 (particle size: 95nm) (*12) | | 20 | | |
| Binder 3 (particle size: 437nm) (*13) | | | | 12 |
| Solvent EG | 5 | 4 | | |
| Water | 11 | 11 | 75 | 80 |
| pH Adjusting agent (TEA) | 1 | | | |
| Thickening agent 1 (*14) | | | 3 | 3 |
| Thickening agent 2 | 60 | 60 | | |
| Viscosity of Coloring Composition | 33800 | 59400 | 50 | 50 |
| Particle size of coloring composition (nm) | 90 | 90 | 88 | 450 |
| pH of coloring composition | 8.2 | 7.1 | 7.2 | 7.1 |
| Coloring method | dye transfer | dye transfer | dye transfer | dye transfer |
| Leakage characteristics | ○ | ○ | × | × |
| Uniformity of coloration | ○ | ○ | ○∼Δ | Δ |
| Aesthetic property | ○ | ○ | ○ | Δ |
| Dry fastness: Contamination | 5 | 5 | 4∼5 | 3∼4 |
| Discoloration, fading | 5 | 4 | 4∼5 | 3 |
| Wet fastness Contamination | 4 | 4 | 3∼4 | 3∼4 |
| Discoloration, fading | 4 | 3 | 3∼4 | 2∼3 |

| Component | Comp. Ex. No. | | |
|---|---|---|---|
| | 1 | 2 | 3 |
| Pigment 3 (particle size: 3200nm) | 5 | | |
| Pigment 4 (particle size: 760nm) | | 5 | 10 |
| Binder 1 (particle size: 76nm) (*11) | 18 | | |
| Binder 2 (particle size: 95nm) (*12) | | 20 | |
| Binder 3 (particle size: 437nm) (*13) | | | 12 |
| Solvent EG | 5 | 4 | |
| Water | 11 | 11 | 75 |
| pH Adjusting agent (TEA) | 1 | | |
| Thickening agent 1 (*14) | | | 3 |
| Thickening agent 2 | 60 | 60 | |
| Viscosity of coloring composition | 33800 | 59400 | 50 |
| Particle size of coloring composition (nm) | 2200 | 770 | 780 |
| pH of coloring composition | 8.3 | 7.1 | 7.0 |
| Coloring method | dye transfer | dye transfer | dye transfer |
| Leakage characteristics | ○ | ○ | × |
| Uniformity of coloration | Δ | Δ | × |
| Aesthetic Property | Δ | Δ∼× | × |
| Dry fastness Contamination | 3 | 3 | 2∼3 |
| Discoloration, fading | 2 | 2∼3 | 2 |
| Wet fastness Contamination | 2 | 3 | 2 |
| Discoloration, fading | 2 | 2 | 1∼2 |

| | | | |
|---|---|---|---|
| ^{x} not according to the invention | | | |

**Table 2**

| Component | Ex. No. | | | |
|---|---|---|---|---|
| | 1 | 2 | 3 | 4^{x} |
| Pigment 1 (particle size: 90m) | 5 | | | 5 |
| Pigment 2 (particle size: 80nm) | | 5 | 10 | |
| Binder 1 (particle size: 76nm) (*11) | 18 | | 12 | |
| Binder 2 (particle size: 95nm) (*12) | | 20 | | |
| Binder 3 (particle size: 437nm) (* 13) | | | | 12 |
| Solvent EG | 5 4 | | | |
| Water | 11 | 11 | 75 | 80 |
| pH Adjusting agent (TEA) | 1 | | | |
| Thickening agent 1 (*14) | | | 3 | 3 |
| Thickening agent 2 | 60 | 60 | | |
| Viscosity of Coloring Composition | 33800 | 59400 | 50 | 50 |
| Particle size of coloring composition (nm) | 90 | 90 | 88 | 450 |
| pH of coloring composition | 8.2 | 7.1 | 7.2 | 7.1 |
| Coloring method | dip dyeing | dip dyeing | dip dyeing | dip dyeing |
| Color spot | Δ | Δ | ○ | ○ |
| Aesthetic property | ○∼Δ | ○∼Δ | ○ | Δ |
| Dry fastness Contamination | 4∼5 | 4∼5 | 5 | 3∼4 |
| Discoloration, fading | 4∼5 | 4 | 5 | 3 |
| Wet fastness Contamination | 3∼4 | 3∼4 | 4 | 3∼4 |
| Discoloration, fading | 3∼4 | 3 | 4 | 2∼3 |

| Component | Comp. Ex. No. | | |
|---|---|---|---|
| | 1 | 2 | 3 |
| Pigment 3 (particle size: 3200nm) | 5 | | |
| Pigment 4 (particle size: 760nm) | | 5 | 10 |
| Binder 1 (particle size: 76nm) (*11) | 18 | | |
| Binder 2 (particle size: 95nm) (*12) | | 20 | |
| Binder 1 (particle size: 437nm) (*13) | | | 12 |
| Solvent EG | 5 | 4 | |
| Water | 11 | 11 | 75 |
| pH Adjusting agent (TEA) | 1 | | |
| Thickening agent 1 (*14) | | | 3 |
| Thickening agent 2 | 60 | 60 | |
| Viscosity of coloring composition | 33800 | 59400 | 50 |
| Particle size of coloring composition (nm) | 2200 | 770 | 780 |
| pH of coloring composition | 8.3 | 7.1 | 7.0 |
| Coloring method | dip dyeing | dip dyeing | dip dyeing |
| Color spot | Δ | Δ | Δ∼× |
| Aesthetic Property | Δ∼× | Δ∼× | × |
| Dry fastness Contamination | 3 | 3 | 3 |
| Discoloration, fading | 2 | 2∼3 | 2 |
| Wet fastness Contamination | 2 | 2∼3 | 2 |
| Discoloration, fading | 2 | 2 | 1 |

| | | | |
|---|---|---|---|
| ^{x} not according to the invention | | | |

The materials *1 to *14 used are as follows:
*1: PRINTEX 25 (black pigment available from Degussa Japan Co., Ltd.);
*2: SMA-1000 (a dispersant resin available from Arakawa Chemical Industry Co., Ltd.);
*3: Acetylene Glycol 104H (a wetting agent available from Nisshin Chemical Industry Co., Ltd.);
*4: Naphthol Red (a red pigment available from Fuji Dyestuff Co., Ltd.);
*5: PLUSCOAT Z-221 (a dispersant resin available from GO Applied Chemical Industry Co., Ltd.);
*6: Ryudye-W Black RC conc (an aqueous dispersion of a black pigment available from Dainippon Ink and Chemicals Inc.);
*7: New Lacqutimine Standard Red FL3G conc (an aqueous dispersion of a red pigment available from Dainippon Ink and Chemicals Inc.);
*8: PEGASOL 3040 (mineral spirit available from Exxon Mobil Corporation);
*9: Hi-ol PKC-500 (an emulsifying agent available from HAYASHI Chemical Industry Co., Ltd.);
*10: Bismol ET-55 (an emulsifying-thickening agent available from Toho Chemical Industry Co., Ltd.);
*11: U-205 (urethane binder emulsion available from Alberding Company; Tg<10°C);
*12: MATSUMISOL MR-50-1 (acryl binder emulsion available from Matsui Dyestuff Industry Co., Ltd.; Tg<10°C);
*13: NK Binder 1753 (acryl binder emulsion available from Shin Nakamura Chemical Industry Co., Ltd.; Tg = 32°C);
*14: A 10% aqueous solution of xanthane gum (thickening agent 1 available from SANSHO Co., Ltd.).

It has been confirmed, from the results listed in the foregoing Tables 1 and 2, that the colored fibrous structures prepared in Examples 1 to 3 according to the present invention are excellent in the uniform coloring ability, the aesthetic properties and the fastness to rubbing as compared with those observed for the colored fibrous structures prepared in Comparative Examples 1 to 3.

The colored fibrous structure of Comparative Example 1 corresponds to one colored using the same coloring composition of Example 1 except that the pigment particles used have a large average particle size and it is recognized that the colored fibrous structure is inferior, to the article of Example 1, in the uniform coloring ability, the aesthetic properties and the fastness to rubbing.

The colored fibrous structure of Comparative Example 2 corresponds to one colored using the same coloring composition of Example 2 except that the pigment particles used have a large average particle size and it is recognized that the colored fibrous structure is inferior in the uniform coloring ability, the aesthetic properties and the fastness to rubbing.

The colored fibrous structure of Comparative Example 3 corresponds to one colored using the same coloring composition of Example 4 except that the binder particles used have a large average particle size and it is recognized that the colored fibrous structure is inferior, to the article of Example 4, in the leakage characteristics, the uniform coloring ability, the color spot-formation, the aesthetic properties and the fastness to rubbing.

## Claims

1. A coloring composition for dyeing a fibrous structure comprising pigment particles and binder polymer particles,
- wherein the pigment particles are hydrophilized with a dispersant consisting of a surfactant and a water-soluble polymer,
- wherein the pigment particles comprise at least one hydrophilic group selected from the group consisting of hydroxyl group, carboxyl group and amino group,
- wherein the binder polymer particles have a Tg value (glass transition point) of not higher than 10 °C and an average particle size ranging from 10 nm to 100 nm,
- wherein the average particle size of the pigment particles falls within the range of from 10 nm to 100 nm, and
- wherein the composition has a viscosity ranging from 1000 to 200,000 mPa •s.

2. A coloring composition for dyeing a fibrous structure comprising pigment particles and binder polymer particles,
- wherein the pigment particles are hydrophilized with a dispersant consisting of a surfactant and a water-soluble polymer,
- wherein the pigment particles comprise at least one hydrophilic group selected from the group consisting of hydroxyl group, carboxyl group and amino group,
- wherein the binder polymer particles have a Tg value (glass transition point) of not higher than 10 °C and an average particle size ranging from 10 nm to 100 nm,
- wherein the average particle size of the pigment particles falls within the range of from 10 nm to 100 nm, and
- wherein the composition has a viscosity ranging from 10 to 1,000 mPa •s.

3. A method for the dye transfer-coloration of a fibrous structure **characterized in that** it uses the coloring composition for dyeing a fibrous structure as set forth in claim 1,
- wherein the fibrous structure is dye transfer-colored according to the silk screen printing technique, while using a high mesh screen having a pore size of not less than 120 mesh and a rubber squeegee having a Shore hardness ranging from 40 to 90 degrees.

4. A method for the dip-coloration of a fibrous structure comprising using the coloring composition for dyeing a fibrous structure as set forth in claim 2,
- wherein the rate of pick-up falls within the range of from 50 to 90%.

## Patentansprüche

1. Farbmittelzusammensetzung zum Färben einer Faserstruktur, umfassend Pigmentpartikel und Bindemittelpolymerpartikel,
- wobei die Pigmentpartikel mit einem Dispersionsmittel hydrophilisiert sind, das aus einem Detergenz und einem wasserlöslichen Polymer besteht,
- wobei die Pigmentpartikel wenigstens eine hydrophile Gruppe umfassen, die aus der aus Hydroxylgruppe, Carboxylgruppe und Aminogruppe bestehenden Gruppe gewählt ist,
- wobei die Bindemittelpolymerpartikel einen Tg-Wert (Glasübergangspunkt) von nicht mehr als 10 °C und eine durchschnittliche Partikelgröße haben, die von 10 nm bis 100 nm reicht,
- wobei die durchschnittliche Partikelgröße der Pigmentpartikel in den Bereich von 10 nm bis 100 nm fällt, und
- wobei die Zusammensetzung eine Viskosität hat, die von 1.000 bis 200.000 mPa•s reicht.

2. Farbmittelzusammensetzung zum Färben einer Faserstruktur, umfassend Pigmentpartikel und Bindemittelpolymerpartikel,
- wobei die Pigmentpartikel mit einem Dispersionsmittel hydrophilisiert sind, das aus einem Detergenz und einem wasserlöslichen Polymer besteht,
- wobei die Pigmentpartikel wenigstens eine hydrophile Gruppe umfassen, die aus der aus Hydroxylgruppe, Carboxylgruppe und Aminogruppe bestehenden Gruppe gewählt ist,
- wobei die Bindemittelpolymerpartikel einen Tg-Wert (Glasübergangspunkt) von nicht mehr als 10 °C und eine durchschnittliche Partikelgröße haben, die von 10 nm bis 100 nm reicht,
- wobei die durchschnittliche Partikelgröße der Pigmentpartikel in den Bereich von 10 nm bis 100 nm fällt, und
- wobei die Zusammensetzung eine Viskosität hat, die von 10 bis 1.000 mPa•s reicht.

3. Verfahren zur Farbtransferfärbung einer Faserstruktur, **dadurch gekennzeichnet, daß** es die Farbmittelzusammensetzung zum Färben einer Faserstruktur nach Anspruch 1 verwendet,
- wobei die Faserstruktur mit Farbtransfer unter Verwendung einer Siebdrucktechnik mit einem hochmaschigen Sieb mit einer Porengröße von nicht weniger als 120 mesh und einer Gummirakel mit einer Shore-Härte, die von 40 bis 90 Grad reicht, gefärbt wird.

4. Verfahren zur Tauchfärbung einer Faserstruktur, umfassend eine Verwendung der Farbmittelzusammensetzung zum Färben einer Faserstruktur nach Anspruch 2,
- wobei die Aufnahmerate in den Bereich von 50 bis 90% fällt.

## Revendications

1. Composition colorante pour la coloration d'une structure fibreuse comprenant des particules de pigment et des particules de polymère liant,
- dans laquelle les particules de pigment sont hydrophilisées avec un dispersant constitué d'un tensioactif et d'un polymère soluble dans l'eau,
- dans laquelle les particules de pigment comprennent au moins un groupe hydrophile choisi dans le groupe constitué par un groupe hydroxyle, un groupe carboxyle et un groupe amino,
- dans laquelle les particules de polymère liant ont une valeur Tg (température de transition vitreuse) qui n'est pas supérieure à 10 °C et une granulométrie moyenne comprise dans la plage allant de 10 nm à 100 nm,
- dans laquelle la granulométrie moyenne des particules de pigment est comprise dans la plage allant de 10 nm à 100 nm, et
- dans laquelle la composition a une viscosité comprise dans la plage allant de 1000 à 200 000 mPa.s.

2. Composition colorante pour la coloration d'une structure fibreuse comprenant des particules de pigment et des particules de polymère liant,
- dans laquelle les particules de pigment sont hydrophilisées avec un dispersant constitué d'un tensioactif et d'un polymère soluble dans l'eau,
- dans laquelle les particules de pigment comprennent au moins un groupe hydrophile choisi dans le groupe constitué par un groupe hydroxyle, un groupe carboxyle et un groupe amino,
- dans laquelle les particules de polymère liant ont une valeur Tg (température de transition vitreuse) qui n'est pas supérieure à 10 °C et une granulométrie moyenne comprise dans la plage allant de 10 nm à 100 nm,
- dans laquelle la granulométrie moyenne des particules de pigment est comprise dans la plage allant de 10 nm à 100 nm, et
- dans laquelle la composition a une viscosité comprise dans la plage allant de 10 à 1 000 mPa.s.

3. Procécé de coloration par transfert de colorant d'une structure fibreuse **caractérisé en ce qu'**il utilise la composition colorante pour la coloration d'une structure fibreuse telle que celle décrite dans la revendication 1,
- dans lequel la structure fibreuse est colorée par transfert de colorant selon la technique de sérigraphie, tout en utilisant un écran à grandes mailles ayant un diamètre de pores de pas moins de 120 mesh et une raclette en caoutchouc ayant une dureté Shore de 40 à 90 degrés.

4. Procédé de coloration par imprégnation d'une structure fibreuse comprenant l'utilisation de la composition colorante pour la coloration d'une structure fibreuse telle que celle décrite selon la revendication 2,
- dans lequel le taux de prise est compris dans la plage allant de 50 à 90 %.
